# EUROPEAN PATENT APPLICATION

(11) **EP 2 639 367 A1**
(43) Date of publication of application: **18.09.2013**
(21) Application number: 12159667.0
(22) Date of filing: 15.03.2012
(51) Int. Cl.: E03F 5/04

(54) **Washing-area drainage trough**

(71) Applicant: DLP Limited, Douglas, Isel of Man IM2 4RW (GB)
(72) Inventor: Stimpson, Robert William, Douglas, IM2 5BN (GB); Luxton, Mark Ian, Onchan, IM3 3BA (GB)
(74) Representative: Hocking, Adrian Niall

(57) **Abstract**

A washing-area drainage trough (10) comprises a sloping-walled drainage channel (12) having a water flow surface defining at least one fall, at least two predefined recessed waste-water outlet locators (14) in the water flow surface, and at least one bridging element (16) locatable in at least one of the recessed waste-water outlet locators (14). The in use bridging element (16) has an upper surface (56) which lies flush or substantially flush with at least a portion of the water flow surface to define a smooth or substantially smooth flow path transition between the water flow surface of the drainage channel (12) and the bridging element (16).

## Description

The present invention relates to a washing-area drainage trough, and to washing-area apparatus having such a drainage trough.

A shower tray with a drainage trough or gully, typically at or along one side, is known. If the drainage trough is sufficiently short, then only one waste-water outlet device is required, usually including a trap, and a fall is provided in the drainage channel to the outlet device.

However, longer drainage troughs may require more than one waste-water outlet device. In this case, the drainage trough is manufactured with a sufficient number of drainage openings to meet requirements, for example, two, three or more. These drainage openings may be in the base of the drainage channel or in a side wall thereof.

The installer must then purchase a suitable drainage trough to meet requirements. However, it is often the case that the installer does not know the specific requirements of a particular installation prior to visiting the work site and/or undertaking the install. It therefore increases installation time and thus costs if an installer must obtain the required drainage trough partway through the installation or only once the installation site has been assessed.

Furthermore, the provision of two or more drainage openings causes a standing water issue if only one of the drainage openings is utilised by having an outlet device connected thereto. If the second drainage opening is not provided with an outlet device, then pooling of run off water can accumulate at that location leading to stagnation and a potential health hazard.

The present invention seeks to overcome these problems.

According to a first aspect of the present invention, there is provided a washing-area drainage trough comprising a sloping-walled drainage channel having a water flow surface defining at least one fall, at least two predefined recessed waste-water outlet locators in the water flow surface, and at least one bridging element locatable in at least one of the recessed waste-water outlet locators, the in use bridging element having an upper surface which lies flush or substantially flush with at least a portion of the water flow surface to define a smooth or substantially smooth flow path transition between the water flow surface of the drainage channel and the bridging element.

The term 'trough' is also intended to include 'gully'.

The bridging element is beneficial in that it aids in maintaining a continuous or substantially continuous and unbroken or substantially unbroken flow path across unused outlet device locations.

Preferable and/or optional features of the first aspect of the invention are set forth in claims 2 to 12, inclusive.

According to a second aspect of the present invention, there is provided a kit of parts for a washing area, comprising a washing-area drainage trough in accordance with the first aspect of the invention, and a shower-floor former or shower tray to which the washing-area drainage trough is liquidly communicable.

According to a third aspect of the present invention, there is provided washing-area apparatus comprising a wet-floor former, a wet-floor covering over the wet-floor former, a washing-area drainage trough in accordance with the first aspect of the invention and which is in liquid communication with the wet-floor covering, a waste-water outlet device at at least one of said waste-water outlet locators and connected to a drain, and an apertured access cover which extends across the drainage channel.

According to a fourth aspect of the present invention, there is provided washing-area apparatus comprising a shower tray having a user-support portion with a fall and a washing-area drainage trough in accordance with the first aspect of the invention and which is in liquid communication with the user-support portion, a waste-water outlet device at at least one of said waste-water outlet locators and connected to a drain, and an apertured access cover which extends across the drainage channel to receive run off waste water from the fall.

The invention will now be more particularly described, by way of example only, with reference to the accompanying drawings, in which:
Figure 1 is a perspective view from above of part of a first embodiment of a washing-area drainage trough, in accordance with the first aspect of the invention and shown in use with a slimline level-entry shower tray;
Figure 2 shows the drainage trough having a waste-device opening formed in one of a plurality of waste-water outlet locators;
Figure 3 shows a bridging element provided in each of the locators not being used;
Figure 4 is a perspective view from above of the bridging element;
Figure 5 is a perspective view from below of the bridging element;
Figure 6 is a cross-sectional view along line A-A in Figure 1;
Figure 7 is a cross-sectional view along line B-B in Figure 3;
Figure 8 shows a waste-water outlet device provided in the waste-device opening shown in Figure 2;
Figure 9 is a cross-sectional view along line C-C in Figure 8, showing the waste-water outlet device clamped in place and without a cover;
Figure 10 is a perspective view from above of a second embodiment of a washing-area drainage trough, in accordance with the first aspect of the invention and shown again in use with a slimline level-entry shower tray;
Figure 11 is a perspective view from above of the bridging element shown in use in Figure 10; and
Figure 12 is a perspective view from below of the bridging element shown in use in Figure 10.

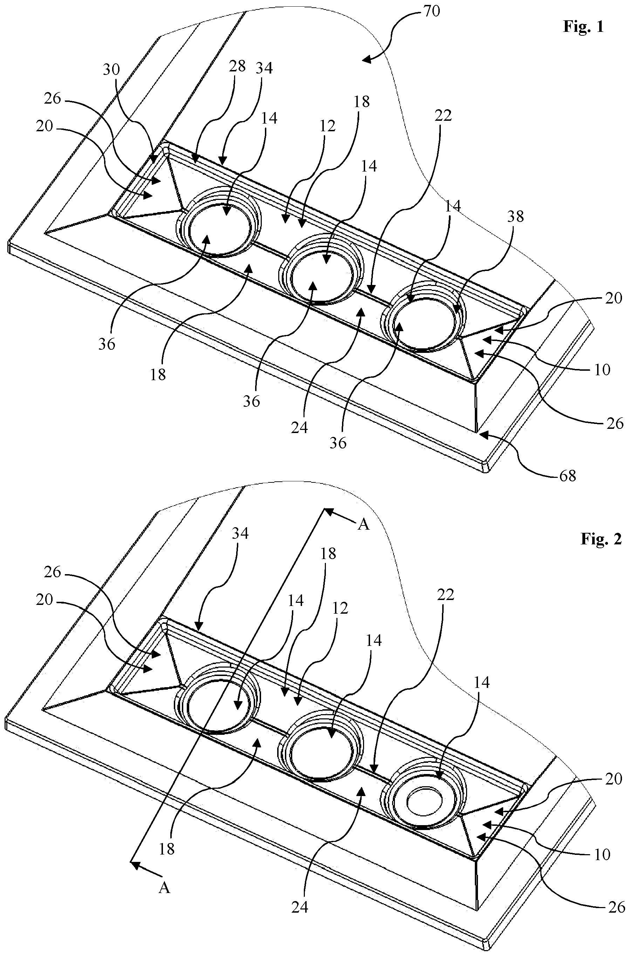

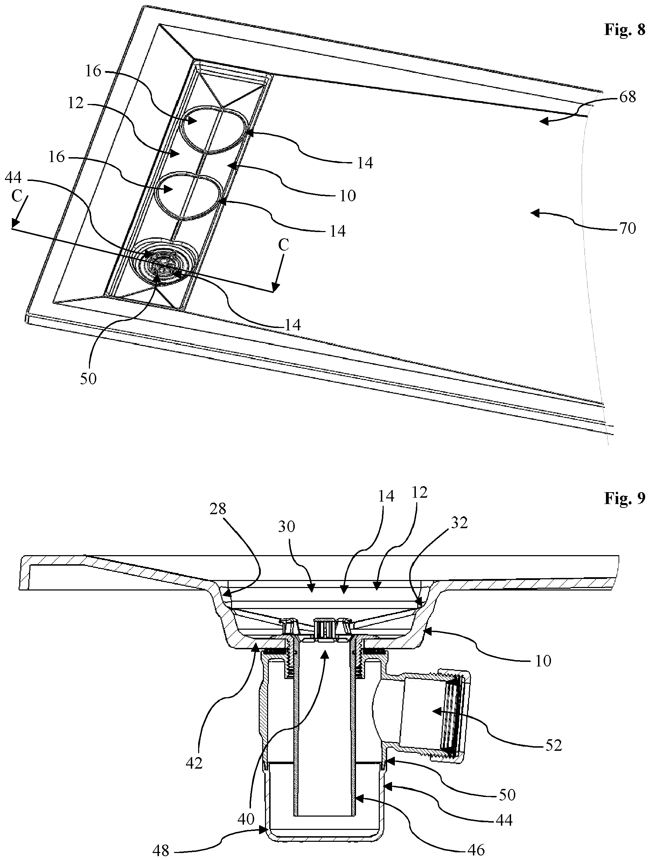

Referring firstly to Figures 1 to 9 of the drawings, there is shown a first embodiment of a washing-area drainage trough 10 which comprises a drainage channel 12, a plurality of predefined recessed waste-water outlet locators 14, and at least one bridging element 16.

The drainage trough 10 is preferably plastics moulded, but may be metal, such as stainless steel. The drainage channel 12 comprises longitudinal sloping side walls 18 and lateral sloping end walls 20. The sloping side and end walls 18, 20 provide a stepped fall to a longitudinal central narrow base portion 22 forming the lowermost region of a flow path between the recessed waste-water outlet locators 14. In this case, the drainage channel 12 is linear, thereby forming a linear flow path between the recessed waste-water outlet locators 14. However, a non-linear or arcuate drainage channel 12 could be envisaged.

Excluding the recessed waste-water outlet locators 14, preferably a lower sloped portion 24 of each sloping side wall 18 defines a regular trapezium shape, and a lower sloped portion 26 of each sloping end wall 20 defines a triangular shape, in this case being an equilateral or isosceles. However, other shapes may be envisaged.

The upper sloped portions 28, 30 of the side walls 18 and the end walls 20 provides a continuous inwardly-projecting shoulder 32 on which an apertured access cover (not shown) can be removably mounted to cover the drainage channel 12. Advantageously, the shoulder 32 also slopes downwardly to drain onto the lower sloped portions 24, 26 of the sloping side and end walls 18, 20. Once seated, the access cover is preferably flush or substantially flush with an uppermost perimeter edge 34 of the sloping side and end walls 18, 20 if the drainage surface 68,70 is a shower tray, or flush or substantially flush with the final shower finished floor surface above this, if the drainage surface 68,70 is that of a wet floor shower former.

To provide for suitable flow to each recessed waste-water outlet locator 14, a fall defined by the sloping side walls 18 is optionally only across the lateral extent of the side walls 18. The sloping end walls 20 thus promote flow towards the recessed waste-water outlet locators 14, thereby dispensing with the need for the sloping side walls 18 to also have a fall across the longitudinal extent. However, this option is not necessarily excluded from the present invention.

Although the lowermost base portion 22 of the drainage channel 12 is symmetrically or substantially symmetrically positioned relative to the lateral extent of the drainage channel 12, it may be offset to one side, dependent on necessity.

In this embodiment, each waste-water outlet locator 14 is symmetrically recessed into opposing sloping side walls 18. Three waste-water outlet locators 14 are provided, although only two may be formed or more than three may be utilised. A spacing between neighbouring waste-water outlet locators 14 is preferably equal or substantially equal, and beneficially, the waste-water outlet locators 14 do not encroach on the sloping end walls 20.

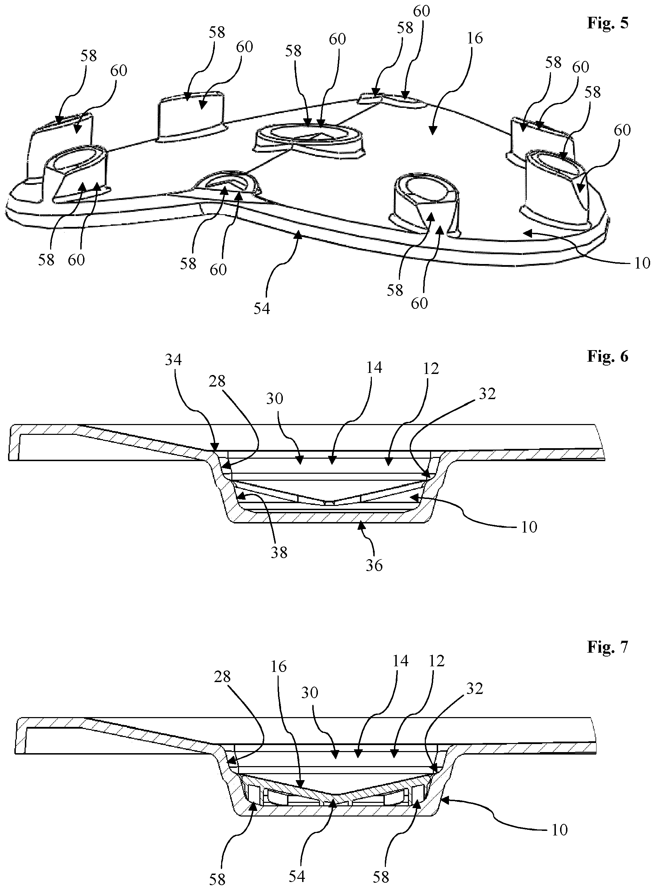

A solid base 36 is provided which closes a bottom of each waste-water outlet locator 14. The base 36 is recessed relative to the lowermost base portion 22 of the drainage channel 12 at which the sloping side walls 18 meet, as shown in Figure 6. From the solid base 36, the sidewalls 38 of the waste-water outlet locator 14 form an arcuate varying height rise to meet the lower sloped portions 24 of the sloping side walls 18 of the drainage channel 12.

Although it is preferable that the base 36 of the waste-water outlet locator 14 is solid, thereby allowing a suitable drain opening 40 to be drilled to accommodate a required waste-water outlet device, the drain opening may be preformed during manufacture. In this case, it would be preferable to include a closure element, such as a bung, to watertightly close the preformed drain opening in the event that it is not to be used. It should be noted that such a closure element could be conveniently formed as part of the aforementioned bridging element 16.

As shown in Figures 2, 8 and 9, the solid base 36 has a sufficient diameter to provide a radially extending perimeter flange 42 around the drain opening 40, once formed. A standard or known waste-water outlet device 44 can thus be located in the drain opening 40 in a conventional fashion. In this case, the waste-water outlet device 44 is clamped to the flange 42, and a dip tube 46 extends into a depending device body 48 to form a water trap 50. A drain outlet 52 extends from a side of the device body 48 for connection to a waste pipe communicating with a drain. However, any other known and suitable waste-water outlet device can be utilised.

A benefit of providing multiple waste-water outlet locators 14 is that a flexibility of location of the waste-water outlet device 44 is significantly improved. For example, if a supporting joist at an installation site obstructs one of the waste-water outlet locators 14, it is likely that another of the waste-water outlet locators 14 is unobstructed and can thus be utilised. Furthermore, in a larger installation or with an installation requiring a greater waste-water flow rate, two or more waste-water outlet devices 44 can be utilised, and these may be in liquid communication with each other external of the drainage channel.

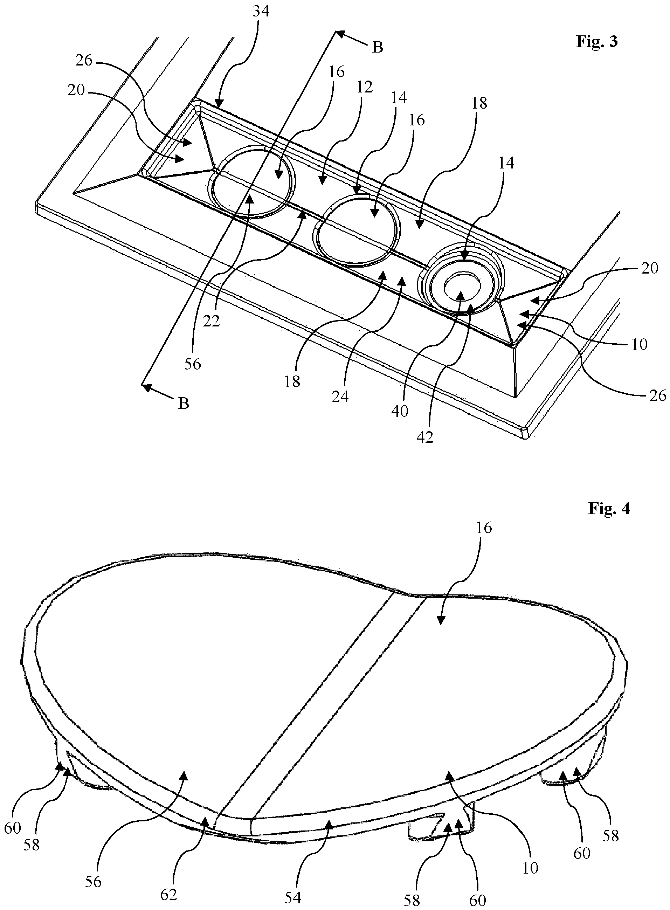

Once it has been decided how many of the waste-water outlet locators 14 are to be utilised, each remaining waste-water outlet locator 14 can be capped using the bridging element 16, as shown in Figures 3, 4, 5 and 7. Preferably, a suitable number of bridging elements 16 are provided for each unused waste-water outlet locator 14.

The bridging element 16 of this embodiment has a body 54 with an upper surface 56 which is profiled to match or substantially match the profile of the lateral extent of the lower sloped portions 24 of the sloping side walls 18, spaced from the sloping end walls 20. In this case, the upper surface 56 is V-shaped or substantially V-shaped, but other shapes are feasible dependent on the profile of the drainage channel 12.

The body 54 of the bridging element 16 is substantially plate- or disc-like, and spacing means 58 are provided on an underside to support the body 54 on the solid base 36 of the waste-water outlet locator 14 and to raise it slightly away therefrom. The spacing means 58 may advantageously be in the form of a plurality of legs 60, which in this case are chamfered to accommodate an upwardly curved perimeter edge of the solid base 36. A height of the legs 60 may vary as required so that the non-planar bridging element 16 can be supported stably on the planar solid base 36. The spacing means 58 is preferably formed at or adjacent to a perimeter edge 62 of the body 54 of the bridging element 16, so that should a drain opening 40 be inadvertently formed in a solid base 36, the legs 60 can still locate on the perimeter flange 42.

The height of the spacing means 58 and a thickness of the body 54 is such that the upper surface 56 of the bridging element 16 lies flush or substantially flush with the lower sloped portions 24 of the opposing sloping side walls 18. A smooth or substantially smooth flow path transition between the sloping side walls 18 of the drainage channel 12 and the bridging element 16 is thus formed.

To hold the bridging element 16 in place, preferably sealant or a water-resistant adhesive is used for bonding the bridging element 16 into the recessed waste-water outlet locator 14. However, other attachment means can be considered, such as a press-fit or snap-fit engagement between an edge of the body 54 of the bridging element 16 and the use of an O-ring to create a watertight seal.

Furthermore, the spacing means may be provided in or adjacent to the waste-water outlet locator 14. For example, if utilising legs, these could be provided on the solid base 36. Additionally or alternatively, a shoulder could be provided in a wall of the waste-water outlet locator 14 to seat the bridging element 16 at the correct height.

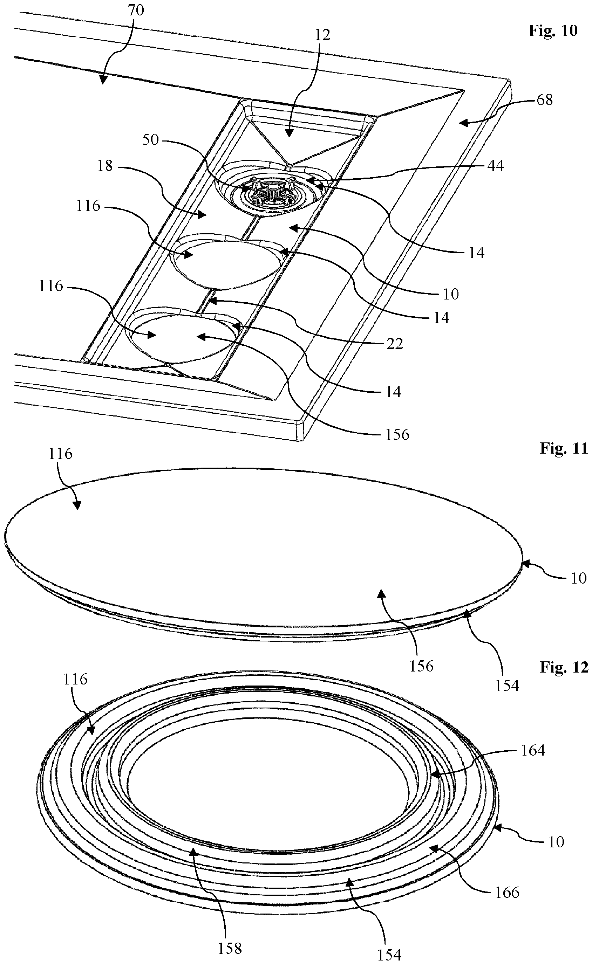

Referring now to Figures 10 to 12, a second embodiment of a washing-area drainage trough is shown. References which are the same as or similar to those of the first embodiment correspond to the same or similar parts, and therefore detailed further description is omitted.

The washing-area drainage trough 10 of this embodiment again comprises a drainage channel 12, a plurality of predefined recessed waste-water outlet locators 14, and at least one bridging element 116. The drainage channel 12 and the waste-water outlet locators 14 are as described above. However, the bridging element 116 has a body 154 with a planar or substantially planar upper surface 156. The bridging element 116 is configured to position the upper surface 156 so as to lie flush or substantially flush with the lowermost base portion 22 of the drainage channel 12. This positioning defines a smooth or substantially smooth flow path transition between the meeting point of the sloping side walls 18 of the drainage channel 12 and the bridging element 116, thereby allowing a substantially unhindered, although narrower, flow path to the waste-water outlet locator 14 in which the waste-water outlet device 44 is provided.

The transition between the bridging element 116 and the sloping side walls 18 of the second embodiment is of a reduced lateral extent than that afforded by the first embodiment. However, for many installation situations requiring lower flow rates, the planar upper surface 156 of the bridging element 116 is sufficient.

Although the legs of the first embodiment can be utilised, the spacing means 158 of this second embodiment is in the form of an elongate arcuate wall 164 which is inboard of the perimeter edge of the body 54 of the bridging element 116. The body 154 includes a depending skirt element 166 adjacent to the perimeter edge which is shaped to accommodate an up-curved perimeter edge of the solid base 36 of the waste-water outlet locator 14. The elongate arcuate wall 164 is positioned radially inwardly of the skirt element 166, and may extend continuously to provide support and accurate spacing for the body 154 relative to the solid base 36.

The waste-water outlet locators may be formed in a side of the drainage channel, as required. This may be beneficial for installations with less clearance, such as between joists.

The drainage trough can be utilised with a wet-floor former, typically as part of a showering area, or as part of a dedicated shower tray. In the present embodiments, the drainage trough 10 is shown being utilised together with a slimline or level-entry shower tray 68. In this case, the shower tray 68 includes a user-support portion 70 which is sufficient to support a person thereon and which has a fall for directing run-off waste water to the drainage trough 10. In these options, it is convenient to form the drainage trough as one-piece with the shower tray or former, and as shown in the drawings. Alternatively, the drainage trough can be separate of the shower tray or former and connected thereto during installation. It is also feasible that the drainage trough can be used as a standalone device, for example, by being embedded in concrete during the forming of a washing area.

It is thus possible to provide a washing-area drainage trough which provides multiple waste-water outlet locators for an installer, along with at least one bridging element to cap an unused waste-water outlet locator. The bridging element lies flush or substantially flush with the edge of the surrounding drainage channel walls, whereby the waste-water flow path is provided with a smooth transition across the capped waste-water outlet locator. Flow to a waste-water outlet locator in or on which is mounted a waste-water outlet device is thus improved, and there is less likelihood of standing water remaining along with the potential hazards that this presents.

## Claims

1. A washing-area drainage trough (10) comprising a sloping-walled drainage channel (12) having a water flow surface defining at least one fall, at least two predefined recessed waste-water outlet locators (14) in the water flow surface, and at least one bridging element (16; 116) locatable in at least one of the recessed waste-water outlet locators (14), the in use bridging element (116) (16) having an upper surface (56; 156) which lies flush or substantially flush with at least a portion of the water flow surface to define a smooth or substantially smooth flow path transition between the water flow surface of the drainage channel (12) and the bridging element (116) (16).

2. A washing-area drainage trough (10) as claimed in claim 1, wherein the upper surface (56) of the bridging element (16) is profiled to match or substantially match the profile of the water flow surface of the drainage channel (12), whereby the edge of the upper surface (56) lies flush or substantially flush with the water flow surface, so as to provide an unstepped or substantially unstepped bridge across the respective waste-water outlet locator (14).

3. A washing-area drainage trough (10) as claimed in claim 2, wherein the upper surface (56) of the bridging element (16) is non-planar.

4. A washing-area drainage trough (10) as claimed in claim 2 or claim 3, wherein the upper surface (56) of the bridging element (16) is or is substantially V-shaped.

5. A washing-area drainage trough (10) as claimed in any one of claims 2 to 4, wherein the bridging element (16) includes spacing means (58) for spacing the upper surface (56) from a bottom surface of the waste-water outlet locator (14).

6. A washing-area drainage trough (10) as claimed in claim 5, wherein the spacing means (58) includes a plurality of spaced apart legs (60).

7. A washing-area drainage trough (10) as claimed in claim 6, wherein the legs (60) support a body (54) of the bridging element (16) so as to be spaced above the bottom surface of the waste-water outlet locator (14).

8. A washing-area drainage trough (10) as claimed in claim 1, wherein the upper surface (156) of the bridging element (116) is planar or substantially planar.

9. A washing-area drainage trough (10) as claimed in claim 8, wherein the bridging element (116) includes spacing means (158) for spacing the upper surface (156) from a bottom surface of the waste-water outlet locator (14), the spacing means (158) having at least one elongate arcuate wall which depends from an underside of a body (154) of the bridging element (116).

10. A washing-area drainage trough (10) as claimed in any one of claims 1 to 9, wherein the recessed waste-water outlet locator (14) is integrally formed as one-piece with the drainage channel (12), and includes a blanking base (36).

11. A washing-area drainage trough (10) as claimed in claim 10, wherein the blanking base (36) is dimensioned to accept an aperture (40) for insertion of a standard waste water outlet device (44) whilst providing a perimeter flange (42) around the aperture (40).

12. A washing-area drainage trough (10) as claimed in claim 11, wherein a lateral extent of the flange (42) is sufficient for the said standard waste water outlet device (44) to be clamped thereto.

13. A kit of parts for a washing area, comprising a washing-area drainage trough (10) as claimed in any one of claims 1 to 12, and a shower-floor former or shower tray (68) to which the washing-area drainage trough (10) is liquidly communicable.

14. Washing-area apparatus comprising a wet-floor former, a wet-floor covering over the wet-floor former, a washing-area drainage trough (10) as claimed in any one of claims 1 to 12 and which is in liquid communication with the wet-floor covering, a waste-water outlet device (44) at at least one of said waste-water outlet locators (14) and connected to a drain, and an apertured access cover which extends across the drainage channel (12).

15. Washing-area apparatus comprising a shower tray (68) having a user-support portion (70) with a fall and a washing-area drainage trough (10) as claimed in any one of claims 1 to 12 and which is in liquid communication with the user-support portion (70), a waste-water outlet device (44) at at least one of said waste-water outlet locators (14) and connected to a drain, and an apertured access cover which extends across the drainage channel (12) to receive run off waste water from the fall.
